# EUROPÄISCHE PATENTSCHRIFT

(11) **EP 2 403 643 B1**
(45) Veröffentlichungstag und Bekanntmachung des Hinweises auf die Patenterteilung: **21.08.2013**
(21) Anmeldenummer: 10707221.7
(22) Anmeldetag: 27.02.2010
(51) Int. Cl.: B01J 47/14, C02F 1/42, C02F 5/00, G05D 11/13, G05D 21/02

(54) **WASSERENTHÄRTUNGSANLAGE UND VERFAHREN ZUM BETRIEB EINER WASSERENTHÄRTUNGSANLAGE MIT SOLLWERTSTEUERUNG DURCH MEHRERE WASSERENTNAHMESTATIONEN**
WATER SOFTENING SYSTEM AND METHOD FOR OPERATING A WATER SOFTENING SYSTEM COMPRISING TARGET VALUE CONTROL THROUGH MULTIPLE WATER REMOVAL STATIONS
ADOUCISSEUR D'EAU ET PROCÉDÉ POUR FAIRE FONCTIONNER UN ADOUCISSEUR D'EAU AVEC COMMANDE PAR VALEUR DE CONSIGNE FOURNIE PAR PLUSIEURES STATIONS DE PRÉLÈVEMENT D'EAU

(30) Priorität: 03.03.2009 DE 102009011132
(43) Veröffentlichungstag der Anmeldung: 11.01.2012
(73) Patentinhaber: Judo Wasseraufbereitung GmbH, 71364 Winnenden (DE)
(72) Erfinder: DOPSLAFF, Carsten, 71364 Winnenden (DE); SÖCKNICK, Ralf, 70806 Kornwestheim (DE)
(74) Vertreter: Kohler Schmid Möbus
(86) Internationale Anmeldenummer: PCT/EP2010/001236
(87) Internationale Veröffentlichungsnummer: WO 2010/099910

(56) Entgegenhaltungen:
- EP-A1- 2 196 885
- DE-A1- 19 918 073
- US-A- 3 807 425

## Beschreibung

Die Erfindung betrifft ein Verfahren zum Betrieb einer
Wasserenthärtungsanlage mit
- einer automatisch verstellbaren Verschneideeinrichtung zum Mischen eines Verschnittwasserstroms V(t)ᵥₑᵣsch_{nift} aus einem ersten, enthärteten Teilstrom V(t)_{teil1weich} und einem zweiten, rohwasserführenden Teilstrom V(t)ₜₑᵢₗ₂ᵣₒₕ, und mit
- einer elektronischen Steuereinrichtung,
wobei die Steuereinrichtung mittels einer oder mehrerer, experimentell bestimmter, momentaner Messgrößen die Verstellposition der Verschneideeinrichtung so regelt, dass die Wasserhärte im Verschnittwasserstrom V(t)_{verschnitt} auf einen vorgegebenen Sollwert (SW) eingestellt wird.

Ein solches Verfahren ist beispielsweise aus der EP 0 900 765 B1 bekannt.

Wasserenthärtung wird überall dort eingesetzt, wo über die üblichen Versorgungssysteme (etwa das Trinkwassernetz) lediglich relativ hartes Wasser zur Verfügung steht, jedoch aus technischen Gründen oder Komfortgründen ein weicheres Wasser gewünscht ist.

Eine Wasserenthärtungsanlage wird in der Regel zentral (etwa in einem Gebäudekeller) installiert und versorgt eine Vielzahl von Wasserentnahmestationen (im einfachsten Fall umfassend Wasserhähne, oder auch technische Wasserverbraucher wie Waschmaschinen) mit enthärtetem Wasser.

Aus technischen oder wirtschaftlichen Gründen ist es oft notwendig oder erwünscht, lediglich teilenthärtetes Wasser einzusetzen. So kann vollständig enthärtetes Wasser zu Korrosionsproblemen führen, wenn eine Schutzschichtbildung in der nachgeschalteten Rohrleitungsinstallation nicht mehr möglich ist. Zudem wird bei einer Vollenthärtung die Kapazität eines Enthärters (meist umfassend ein lonentauscherharz) schnell erschöpft, und es muss frühzeitig regeneriert werden. Dies ist mit einem hohen Salzverbrauch und damit erhöhten Kosten verbunden. Zur Durchführung einer Teilenthärtung ist eine Verschneideeinrichtung zum Mischen von enthärtetem Wasser (auch als Weichwasser bezeichnet) und Rohwasser notwendig. In der Regel ist es erwünscht, die Wasserhärte im Verschnittwasser, das ist das Gemisch von enthärtetem Wasser und Rohwasser, einzustellen und zu steuern.

Die EP 0 900 765 B1 beschreibt eine Vorrichtung zur Wasserenthärtung nach dem lonenaustauschprinzip mit einer Verschneidevorrichtung. Eine Auswerte- und Regeleinheit stellt die Härte eines Mischwasser über das Verhältnis von Rohwasser und Weichwasser mittels eines Sperrventils oder einer Querschnittsdrössel automatisch ein. Die Härte des Rohwassers wird dafür über einen Leitwert ermittelt.

Die gewünschte Verschnittwasserhärte wird bei bekannten Wasserenthärtungsanlagen an deren jeweiliger Steuereinrichtung direkt eingegeben und als Sollwert für die Steuerung der Verschneideeinrichtung eingesetzt. Die Eingabe der gewünschten Verschnittwasserhärte erfolgt in der Regel vor der Inbetriebnahme der Wasserenthärtungsanlage. Die an die Wasserenthärtungsanlage angeschlossenen Wasserentnahmestellen erhalten alle Verschnittwasser gleicher Härte. Der Sollwert bleibt während des Betriebes der Wasserenthärtungsanlage konstant.

Je nach Anwendungsfall können jedoch wechselnde Wasserhärten an den Wasserentnahmestationen erwünscht oder notwendig sein. Beispielsweise kann für die Bereitung von Kaltgetränken mineralreiches Wasser mit einer relativ hohen Wasserhärte erwünscht sein, während zum Betrieb einer Waschmaschine zum Sparen von Waschmittel eine relativ niedrige Wasserhärte erwünscht ist.

Die Eingabe eines neuen Sollwerts an der Steuereinrichtung ist recht umständlich, insbesondere da die Wasserenthärtungsanlage meist zentral am Eingang einer Hausinstallation (etwa in einem Gebäudekeller) untergebracht ist.

Die DE 199 18 073 A1 beschreibt ein Verfahren und eine Anordnung zur Einstellung einer Wasserhärte. Eine Verschneideeinrichtung, die Rohwasser und Weichwasser verschneidet und ein auf eine Sollhärte eingestelltes Verschnittwasser einem Wasserkreislauf zuführt, wird mit einer elektronischen Steuerung betrieben. Eine Wasserhärteverarbeitungseinheit bestimmt automatisch Härtewerte für das Rohwasser, das Weichwasser und das Kreislaufwasser. Eine Sollhärte wird an der Wasserhärteverarbeitungseinheit eingegeben. Im Kühlkreislauf kann ein Wassermengensignal gewonnen werden.

### Aufgabe der Erfindung

Es ist die Aufgabe der vorliegenden Erfindung, mit einer Wasserenthärtungsanlage auf komfortable Weise Wasser unterschiedlicher Härtegrade an mehreren, angeschlossenen Wasserentnahmestationen zu Verfügung zu stellen.

### Kurze Beschreibung der Erfindung

Diese Aufgabe wird gelöst durch ein Verfahren der eingangs genannten Art, das dadurch gekennzeichnet ist, dass die Verschneideeinrichtung mehrere Wasserentnahmestationen mit Verschnittwasser versorgt,
dass der Sollwert (SW) durch eine Einstellung der mehreren Wasserentnahmestationen vorgegeben wird, wobei der Sollwert (SW) in Abhängigkeit davon, an welcher der Wasserentnahmestationen gerade Verschnittwasser entnommen wird, bestimmt wird,
und dass die Einstellung der mehreren Wasserentnahmestationen an die Steuereinrichtung übermittelt wird.

Gemäß der vorliegenden Erfindung wird der Sollwert der Verschnittwasserhärte, auf den die Steuereinrichtung der Wasserenthärtungsanlage die Verschneideeinrichtung einregelt, nicht an der Steuereinrichtung vorgegeben, sondern an einer Wasserentnahmestation. Die Wasserentnahmestation umfasst dabei zumindest eine Entnahmearmatur (etwa einen Zapfhahn) und ist entfernt von der Wasserenthärtungsanlage angeordnet und über ein Leitungssystem an diese angeschlossen. Die Wasserenthärtungsanlage ist typischerweise am Eingang einer Haus- oder Industrieinstallation angeordnet, und die Wasserentnahmestation ist Teil dieser Haus- oder Industrieinstallation. Im Rahmen der Erfindung ist die Wasserenthärtungsanlage von der oder den Wasserentnahmestationen typischerweise durch Gebäudewände und/oder Geschossdecken voneinander getrennt.

Die Einstellung der Wasserentnahmestationen beinhaltet unmittelbar oder mittelbar eine Information über eine derzeit gewünschte Wasserhärte, die dann als Sollwert von der Steuereinrichtung an der Verschneideeinrichtung angewendet wird (man beachte, dass erfindungsgemäß auch mehrere Verschneideeinrichtungen in der Wasserenthärtungsanlage vorgesehen sein können). Die Einstellung der Wasserentnahmestationen ist durch einen Bediener veränderbar, so dass über die Einstellung der Bediener eine gewünschte Wasserhärte auswählen kann. Die Einstellung wird dann über geeignete Mittel (etwa per Funk oder über eine Datenleitung) an die Steuereinrichtung übermittelt, ausgewertet und für die Steuerung der Verstellposition der Verschneideeinrichtung angewandt, so dass an der oder den Wasserentnahmestationen alsbald Verschnittwasser der gewünschten Härte zur Verfügung stehen kann.

Mit der vorliegenden Erfindung braucht nicht mehr für jeden Einsatzzweck Wasser mit der gleichen, in der Praxis fest vorgegebenen Wasserhärte verwendet zu werden. Je nach Anwendungsfall können unterschiedliche Wasserhärten, die erwünscht oder notwendig sind, individuell komfortabel ausgewählt werden. Beispielsweise kann bei bestimmten Anwendungen auf eine Enthärtung ganz verzichtet werden (etwa für eine Gartenbewässerung oder Toilettenspülungen). Zum Trinken von Wasser kann individuell mineralreiches, hartes Wasser oder enthärtetes, weiches Wasser erwünscht sein. Teilenthärtetes Wasser bietet sich beispielsweise zum Duschen an. Dieses reduziert einerseits Kalkflecken an Armaturen, andererseits lassen sich Körperpflegemittel leicht wieder abspülen. Enthärtetes, weiches Wasser kann für die Zubereitung von Tee oder Kaffee, zum Gießen von bestimmten Pflanzen wie Orchideen oder zum Bügeln vorteilhaft sein.

Gemäß der Erfindung ist vorgesehen, dass der Sollwert (SW) in Abhängigkeit davon, an welcher der Wasserentnahmestationen gerade Verschnittwasser entnommen wird, bestimmt wird. Mit anderen Worten: Die übermittelte Einstellung (hier der mehreren Wasserentnahmestationen) umfasst die Information, an welcher Wasserentnahmestation gerade Wasser entnommen wird. Diejenige Wasserentnahmestation, an der gerade Verschnittwasser entnommen wird, bestimmt den Sollwert. Die Zapfhandlung eines Bedieners oder eines automatisch agierenden technischen Verbrauchers kann unmittelbar ausgewertet werden, ohne dass es weiterer Eingabehandlungen zur Gewinnung der besagten Information bedarf.

Momentane Messgrößen, anhand derer die Regelung der Verschnittwasserhärte erfolgt, können beispielsweise die Rohwasserhärte oder Durchflüsse an Rohwasser oder Weichwasser an der Verschneideeinrichtung sein.

### Bevorzugte Varianten der Erfindung

Bei einer besonders vorteilhaften Variante des erfindungsgemäßen Verfahrens weist mindestens eine Wasserentnahmestation eine Eingabevorrichtung auf, an der der Sollwert (SW) eingegeben wird. Diese Variante erlaubt eine individuelle Auswahl der gewünschten Wasserhärte an der Wasserentnahmestation. Die zu übermittelnde Einstellung umfasst in dieser Variante den an der Eingabevorrichtung eingegebenen Sollwert. Der Sollwert braucht dabei nicht direkt numerisch eingegeben oder übermittelt zu werden, sondern kann auch indirekt durch Auswahl und Mitteilung einer Option von mehreren Optionen (etwa weich-mittel-hart) oder der kontinuierlich verstellbaren Position auf einer Skala bestehen, wobei erst die Steuereinrichtung der Option oder Skalaposition den Sollwert numerisch zuzuordnen braucht. Die Eingabevorrichtung kann beispielsweise ein Drehschalter oder eine Tastatur oder ein Schieber mit Skala sein. Die Wasserentnahmestation umfasst dann neben der eigentlichen Entnahmearmatur (Verbrauchstelle, etwa einem "Wasserhahn") auch die Eingabevorrichtung. Im Falle von mehreren Wasserentnahmestationen weist in dieser Ausführungsform zumindest eine der Wasserentnahmestationen eine Eingabevorrichtung auf, mit der die für diese Wasserentnahmestation gewünschte Wasserhärte vorgegeben wird.

Bei einer bevorzugten Weiterentwicklung dieser Variante wird der über die Eingabevorrichtung an der Wasserentnahmestation eingegebene Sollwert (SW) mittels einer Funkdatenübertragung oder einer leitungsgebundenen Datenübertragung der elektronischen Steuereinrichtung der Wasserenthärtungsanlage übermittelt wird. Dadurch kann auf einfache Weise die Information über die Einstellung der einen oder der mehreren Wasserentnahmestationen an die Steuereinrichtung auch über größere Entfernungen und durch Wände und Decken übertragen werden. Insbesondere können WLAN oder RS232 eingesetzt werden.

Bei einer bevorzugten Verfahrensvariante sind zumindest für einen Teil der Wasserentnahmestationen feste, in der Steuereinrichtung definierte Sollwerte zugewiesen. Der Sollwert kann dann allein darüber bestimmt werden, dass an einer bestimmten Wasserentnahmestation gerade Wasser entnommen wird. Es sind keinerlei weitere Eingabehandlungen durch einen Bediener zur Vorgabe des Sollwerts nötig; ebenso sind keine Eingabevorrichtungen an den Wasserentnahmestationen für die Eingabe eines Sollwerts erforderlich. Für die Wasserentnahmestationen (oder auch Wasserentnahmestationsgruppen) dieses Teils ist jeweils ein Entnahmesensor eingerichtet, der eine Wasserentnahme an der Wasserentnahmestation registriert (etwa über eine Durchflussmessung, oder über das Auslesen der Stellung eines Zapfhahns) und an die Steuereinrichtung weitermeldet, etwa per Funk oder leitungsgebunden. Diese Variante ist besonders nützlich, wenn bei verschiedenen Zapfhandlungen an der gleichen Wasserentnahmestation immer wieder die gleiche Wasserhärte benötigt wird (etwa weil ein bestimmtes technisches Gerät dort dauerhaft angeschlossen ist), aber die verschiedenen Wasserentnahmestationen jeweils unterschiedliche Wasserhärten anfordern. Beispielsweise wird bei einer Hausinstallation in die Küchenleitung immer 2°iges Wasser eingespeist, zur Badewanne / Dusche immer 6°iges Wasser, während der WC-Kasten mit hartem Wasser gefüllt wird. Jede dieser Entnahmestellen (Wasserentnahmestationen) hat typischerweise ihre eigene Zuleitung von der Verschneideeinrichtung aus. Jedoch können auch "Leitungsgruppen" (Wasserentnahmestationsgruppen) gebildet werden, z.B. Toilettenleitung für alle Toiletten, Duschleitung für alle Duschen, usw. In die jeweilige Leitung wird immer Wasser mit der gleichen Härte eingespeist, ein Ausspülen vor Benutzung des Wassers ist nicht erforderlich. Die Verschneideeinrichtung wird bevorzugt durch bloßes Öffnen einer Entnahmestelle einfach und rasch angesteuert.

Bei einer anderen, vorteilhaften Verfahrensvariante ist vorgesehen, dass im Falle einer gleichzeitigen Wasserentnahme an mehreren Wasserentnahmestationen der Sollwert durch diejenige Wasserentnahmestation, an der als erstes mit der Wasserentnahme begonnen wurde, bestimmt wird. Dieses Vorgehen sorgt dafür, dass in einer laufenden Wasserentnahme keine Änderung des Härtegrades des entnommenen Wassers erfolgt. An Wasserentnahmestellen, die später mit der Wasserentnahme begonnen haben und daher (noch) nicht die angeforderte Wasserhärte erhalten, kann ein Warnsignal ausgegeben werden.

Bei einer alternativen, ebenfalls vorteilhaften Verfahrensvariante ist vorgesehen, dass im Falle einer gleichzeitigen Wasserentnahme an mehreren Wasserentnahmestationen der Sollwert durch diejenige Wasserentnahmestation, die die niedrigste Verschnittwasserhärte anfordert, bestimmt wird. Dies schützt Wasserverbraucher, die lediglich eine niedrige Wasserhärte vertragen und durch eine zu hohe Wasserhärte beschädigt werden könnten. Eine niedrige Wasserhärte wird andererseits von technischen Wasserverbrauchern, die normalerweise mit einer höheren Wasserhärte arbeiten, in der Regel gut vertragen. Alternativ sind auch andere Prioritäten der Wasserentnahmestationen möglich, etwa der Vorrang einer bestimmten Wasserentnahmestation unabhängig von der dort angeforderten Wasserhärte. Es ist erfindungsgemäß auch möglich; die Wasserentnahme stets nur an einer Wasserentnahmestation zu gestatten und die übrigen solange zu sperren, bis die dortige Wasserentnahme beendet ist.

Besonders bevorzugt ist eine Verfahrensvariante, die dadurch gekennzeichnet ist, dass eine Aufteilung des Verschnittwasserstroms V(t)_{verschnitt} auf die verschiedenen Wasserentnahmestationen unmittelbar hinter dem Zusammenfluss von weichwasserführendem Teilstrom V(t)_{teil1weich} und rohwasserführendem Teilstrom V(t)ₜₑᵢₗ₂ᵣₒₕ erfolgt. In diesem Fall hängt die Wasserhärte während der ersten Zeit der Wasserentnahme an einer Wasserentnahmestation nur von der zuletzt dort gezapften Wasserhärte ab. Besonders vorteilhaft wird in dieser Variante nur das gleichzeitige Zapfen an einer Wasserentnahmestation gestattet und den einzelnen Wasserentnahmestationen jeweils ein fester Sollwert zugewiesen. Dadurch wird an den einzelnen Wasserentnahmestationen auch zu Beginn einer Wasserentnahme bereits die gewünschte Wasserhärte bereitgestellt; ein Ausspülen von Leitungen ist nicht erforderlich.

Vorteilhaft ist weiterhin eine Verfahrensvariante, gemäß der eine Anzeige an einer Wasserentnahmestation signalisiert, sobald das dort entnommene Wasser den vorgegebenen Sollwert (SW) erreicht hat. Wasser zwischen Verschneideeinrichtung und Verbrauchsstelle (Wasserentnahmestation) muss in der Regel zu Beginn einer Wasserentnahme zuerst ausgespült werden, weil dessen Härte einem früher eingestellten Sollwert entspricht. Das auszuspülende Volumen an Wasser ist abhängig vom Leitungsvolumen zwischen Verschneideeinrichtung und Verbrauchsstelle. Durch das Ausspülen vor der eigentlichen Entnahme steht frisches, nicht stagniertes Wasser zur Verfügung. Die Bestimmung des ausgespülten Volumens kann mit einem Durchflussmessgerät, Volumenzähler oder näherungsweise über ein Zeitglied an der Verbrauchsstelle erfolgen. Das Durchflussmessgerät oder der Volumenzähler kann an der Verbrauchsstelle insbesondere im Wasserhahn oder in der Zuleitung integriert sein. Alternativ kann auch vor Ort an der Wasserentnahmestation experimentell die Wasserhärte geprüft werden, etwa mittels einer ionenselektiven Elektrode oder mittels titrimetrischer Bestimmung. Die Anzeige hilft dabei, die Verwendung eines Wassers mit einer (noch) unerwünschten Härte zu vermeiden. Die Anzeige kann beispielsweise als grüne Kontrolllampe ausgebildet sein, die leuchtet, sobald (nach ausreichender Spülung der Zuleitung) und solange die gewünschte Wasserhärte bereitsteht. Insbesondere kann eine optische Anzeige oder eine akustische Anzeige eingesetzt werden.

Ebenso vorteilhaft ist eine Verfahrensvariante, nach der ein Signalgeber an einer Wasserentnahmestation ein Warnsignal abgibt, solange das dort entnommene Wasser den vorgegebenen Sollwert (SW) noch nicht erreicht hat. Der Signalgeber hilft ebenfalls dabei, die Verwendung eines Wassers mit einer unerwünschten Härte zu vermeiden. Das Signalgeber kann beispielsweise als rote Kontrolllampe oder ausgebildet sein, die leuchtet, solange die gewünschte Wasserhärte noch nicht bereitsteht (also die Zuleitung noch nicht ausreichend gespült ist). Es können insbesondere optische und akustische Signalgeber verwendet werden.

Bei einer bevorzugten Verfahrensvariante zeigt eine Anzeige an einer Wasserentnahmestation an, welcher Sollwert (SW) für diese Wasserentnahmestation vorgegeben ist. Dies verringert die Gefahr, versehentlich eine unerwünschte Wasserhärte zu zapfen. Es kann leicht kontrolliert werden, welche Härte das aktuell entnommene Wasser aufweist.

Eine andere, bevorzugte Verfahrensvariante sieht vor, dass die Wasserenthärtungsanlage mindestens zwei Durchflussmesser zur direkten oder indirekten Bestimmung der momentanen Teilströme V(t)_{teil1weich} und V(t)ₜₑᵢₗ₂ᵣₒₕ umfasst, und dass die Steuerung der Verschneideeinrichtung anhand einer gemessenen, momentanen Rohwasserhärte WHᵣₒₕ^{mom} und dem vorgegebenen Sollwert (SW) für die Wasserhärte im Verschnittwasserstrom V(t)_{verschnitt} in Rückkopplung mit den bestimmten Teilströmen V(t)_{teil1weich} und V(t)ₜₑᵢₗ₂ᵣₒₕ erfolgt. Die Einstellung der Verschneidung ist dann besonders genau. Es können Schwankungen der Anteile der Teilströme im Verschnittwasser, die sich bei identischer Einstellung der Verschneideeinrichtung aufgrund von Schwankungen von Außenbedingungen (etwa der Druck des zulaufenden Rohwassers, oder die Größe des Entnahmeflusses von Verschnittwasser) etwaig ergeben, ausgeglichen werden, und die Verschnittwasserhärte bleibt besonders genau am Sollwert.

Besonders bevorzugt ist auch eine Verfahrensvariante, die dadurch gekennzeichnet ist, dass mindestens eine Wasserentnahmestation einen Kaltwasserzufluss und einen Warmwasserzufluss mit Anteilen entsprechend einer Einstellung einer Mischeinrichtung an der Wasserentnahmestation mischt,
wobei einer der Zuflüsse, insbesondere der Warmwasserzufluss, eine feste Wasserhärte aufweist und der andere Zufluss, insbesondere der Kaltwasserzufluss, über die Verschneideeinrichtung mit Verschnittwasser versorgt wird,
und dass die Einstellung der Mischeinrichtung an die Steuereinrichtung übermittelt wird und zur Bestimmung des Sollwerts ausgewertet wird. In der Regel ist für das Warmwasser eine geringe Härte (typisch <= 2°dH, meist 0°dH) vorgesehen. Durch das Mischen der beiden Zuflüsse erhält der Verbraucher Mischwasser einer mittleren Temperatur. Durch das Mischen der beiden Zuflüsse stellt sich eine Härte im Mischwasser in Abhängigkeit der Anteile der Zuflüsse und deren jeweiligen Wasserhärten ein. Für das Mischwasser ist entweder eine Mischwasserhärte fest oder durch eine Einstellung der Wasserentnahmestation vorgegeben. Die Steuereinrichtung ermittelt dann aus den Anteilen der Zuflüsse und der vorgegebenen Mischwasserhärte den für deren Erreichung notwendigen Sollwert für das Kaltwasser. Durch die Verfahrensvariante kann die Härte des Mischwassers eingeregelt werden.

Bevorzugt ist weiterhin eine Verfahrensvariante, bei der die Wasserenthärtungsanlage mehrere automatisch verstellbare Verschneideeinrichtungen aufweist, deren Verstellpositionen von der Steuereinrichtung geregelt werden. Dadurch kann die Wasserenthärtungsanlage flexibler und effektiver eingesetzt werden.

Bei einer besonders bevorzugten Weiterentwicklung dieser Verfahrensvariante ist vorgesehen, dass Verschnittwasserabläufe von mehreren Verschneideeinrichtungen zusammengeführt sind und der zusammengeführte Verschnittwässerablauf eine oder mehrere Wasserentnahmestationen mit Verschnittwasser versorgt,
und dass die Steuereinrichtung anhand des Sollwerts (SW), der durch die Einstellung der einen oder der mehreren Wasserentnahmestationen am zusammengeführten Verschnittwasserablauf vorgegeben wird, eine der zugehörigen Verschneideeinrichtungen zur Bereitstellung des Verschnittwassers auswählt und auf den Sollwert (SW) einregelt, und die übrigen zugehörigen Verschneideeinrichtungen für die Bereitstellung von Verschnittwasser sperrt.
Jede Verschneideeinrichtung kann beispielsweise Verschnittwasser erzeugen, dessen Wasserhärte innerhalb eines bestimmten Intervalls liegt (z.B. kann eine Verschneideeinrichtung für Verschnittwasser im Härtebereich I zuständig sein, eine weitere für den Härtebereich II und eine dritte für den Härtebereich III).

Damit werden extreme und häufige Einstellungsänderungen der einzelnen Verschneideeinrichtungen vermieden, und der Materialverschleiß verringert sich. Außerdem werden die vorgegebenen Sollwerte (SW) schneller erreicht, wenn jede einzelne Verschneideeinrichtung lediglich innerhalb eines begrenzten Härteintervalls arbeitet. Typischerweise decken die verschiedenen Verschneideeinrichtungen jeweils unterschiedliche, bevorzugt aneinander angrenzende Härteintervalle ab.

Bei einer weiteren, besonders bevorzugten Weiterentwicklung der obigen Verfahrensvariante ist vorgesehen, dass mehrere Verschneideeinrichtungen jeweils allein eine oder mehrere Wasserentnahmestationen mit Verschnittwasser versorgen,
dass die elektronische Steuervorrichtung mittels einer oder mehrerer, experimentell bestimmter, momentaner Messgrößen die Verstellpositionen der allein versorgenden Verschneideeinrichtungen so regelt, dass die Wasserhärte im Verschnittwasserstrom einer jeweiligen Verschneideeinrichtung auf einen jeweiligen Sollwert (SW) eingestellt wird,
und dass die jeweiligen Sollwerte (SW) der allein versorgenden Verschneideeinrichtungen jeweils durch eine Einstellung der einen oder der mehreren Wasserentnahmestationen, die an die jeweilige Verschneideeinrichtung angeschlossen sind, vorgegeben werden. Diese Variante gestattet die gleichzeitige Bereitstellung von Verschnittwasser unterschiedlicher, aber individuell und komfortabel vorgewählter Härte durch die verschiedenen Verschneideeinrichtungen.

In den Rahmen der vorliegenden Erfindung fällt auch ein Wasserenthärtungssystem,
umfassend eine Wasserenthärtungsanlage mit
- einer automatisch verstellbaren Verschneideeinrichtung zum Mischen eines Verschnittwasserstroms V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ, und mit
- einer elektronischen Steuereinrichtung,
wobei die Steuereinrichtung mittels einer oder mehrerer, experimentell bestimmter, momentaner Messgrößen die Verstellposition der Verschneideeinrichtung so regelt, dass die Wasserhärte im Verschnittwasserstrom V(t)_{verschnitt} auf einen vorgegebenen Sollwert (SW) eingestellt wird,
das dadurch gekennzeichnet ist, dass das Wasserversorgungssystem mehrere Wasserentnahmestationen, die zur Versorgung mit Verschnittwasser durch die Verschneideeinrichtung an die Wasserenthärtungsanlage angeschlossen sind, umfasst und die Verschneideeinrichtung die mehreren Wasserentnahmestationen mit Verschnittwasser versorgt, dass Mittel zur Erfassung einer Einstellung der mehreren Wasserentnahmestationen vorgesehen sind, wobei die Einstellung die Information umfasst, an welcher Wasserentnahmestation gerade Wasser entnommen wird,
dass Mittel zur Übermittlung der erfassten Einstellung an die elektronische Steuereinrichtung vorgesehen sind,
und dass die elektronische Steuereinrichtung dazu ausgebildet ist, einen den übermittelten Einstellungen entsprechenden Sollwert an der Verschneideeinrichtung anzuwenden, wobei der Sollwert (SW) in Abhängigkeit davon, an welcher der Wasserentnahmestationen gerade Verschnittwasser entnommen wird, bestimmt wird. Das Wasserentnahmesystem kann auf komfortable Weise wechselnde Wasserhärten an den Wasserentnahmestationen mit einer Wasserenthärtungsanlage zur Verfügung stellen, ohne dass dafür eine manuelle Verstellung an deren Steuereinheit erforderlich wäre.

Bei einer bevorzugten Ausführungsform des erfindungsgemäßen Wasserenthärtungssystems ist vorgesehen, dass die Mittel zur Erfassung einer Einstellung eine Eingabevorrichtung, insbesondere einen Drehschalter oder eine Tastatur, und/oder Entnahmesensoren, insbesondere Durchflussmesser oder Ventil-Stellungsmesssensoren, umfassen,
und/oder dass die Mittel zur Übermittlung der erfassten Einstellung einen Funksender und einen Funkempfänger oder ein Datenübertragungskabel umfassen. Diese Mittel zur Erfassung und diese Mittel zur Übermittlung sind besonders einfach und haben sich in der Praxis bewährt.

Eine andere, bevorzugten Ausführungsform ist dadurch gekennzeichnet, dass die Wasserenthärtungsanlage mehrere Verschneideeinrichtungen jeweils zur Versorgung einer oder mehrerer Wasserentnahmestationen mit Verschnittwasser aufweist,
und dass die elektronische Steuervorrichtung mittels einer oder mehrerer, experimentell bestimmter, momentaner Messgrößen die Verstellpositionen der Verschneideeinrichtungen so regelt, dass die Wasserhärte im jeweiligen Verschnittwasserstrom V(t)_{verschnitt} auf einen jeweiligen vorgegebenen Sollwert (SW) eingestellt wird. Dadurch kann die Wasserenthärtungsanlage flexibler und effektiver eingesetzt werden.

Ebenfalls in den Rahmen der vorliegenden Erfindung fällt die Verwendung eines erfindungsgemäßen Wasserenthärtungssystems in einem oben beschriebenen, erfindungsgemäßen Verfahren.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigt:
- Fig. 1:: eine schematische Darstellung eines Wasserenthärtungssystems mit einer Eingabevorrichtung für die gewünschte Verschnittwasserhärte an einer Wasserentnahmestation;
- Fig. 2:: eine schematische Darstellung eines erfindungsgemäßen Wasserenthärtungssystems mit mehreren Wasserentnahmestationen für unterschiedliche Verschnittwasserhärten;
- Fig. 3:: eine schematische Darstellung eines Wasserenthärtungssystems mit mehreren Verschneideeinrichtungen, die jeweils eine eigene Wasserentnahmestelle mit Verschnittwasser versorgen;
- Fig. 4:: eine schematische Darstellung eines Wasserenthärtungssystems mit mehreren Verschneideeinrichtungen, die zusammen eine Wasserentnahmestelle mit Verschnittwasser versorgen.

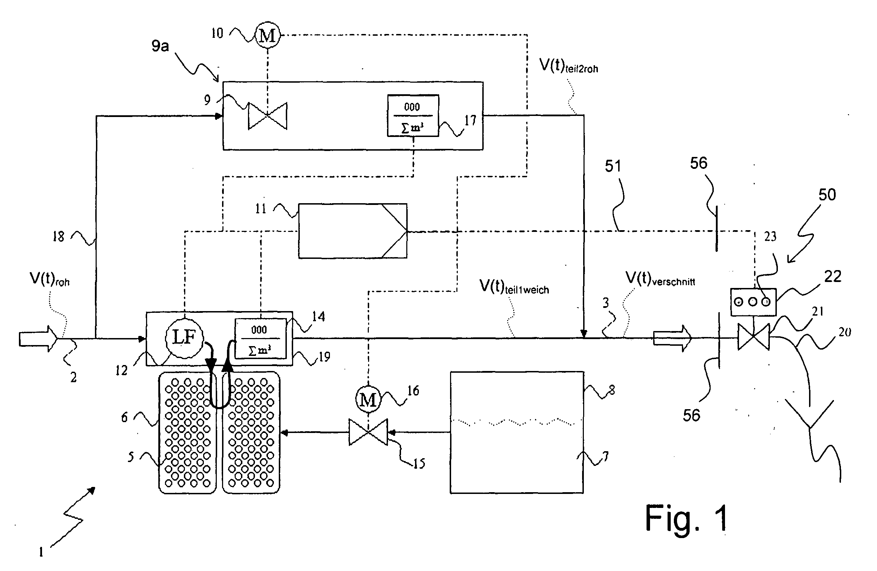

Die Fig. 1 zeigt zur allgemeinen Erläuterung in schematischer Darstellung ein Wasserenthärtungssystem, umfassend eine Wasserenthärtungsanlage 1 sowie (hier) eine Wasserentnahmestation 50.

Die Wasserenthärtungsanlage 1 ist über einen Zulauf 2 an ein lokales Wasserversorgungssystem, etwa das Trinkwassernetz, angeschlossen. Die Wasserenthärtungsanlage befindet sich dafür in einem Versorgungsraum (etwa Kellerraum) eines Gebäudes, welches über die Wasserenthärtungsanlage mit Wasser (insbesondere Verschnittwasser und/oder Weichwasser) versorgt werden soll.

Ein erster Teil des am Zulauf 2 fließenden (gesamten) Rohwasserstroms V(t)ᵣₒₕ fließt einer Enthärtungsvorrichtung 6 zu, welche insbesondere einen Steuerkopf 19 sowie zwei Kammern mit lonentauscherharz 5 aufweist. Ein zweiter Teil des Rohwassers fließt in eine Bypassleitung 18 ein.

Das in die Enthärtungsvorrichtung 6 einfließende Rohwasser passiert zunächst einen Leitfähigkeitssensor 12, mit dem die momentane Wasserhärte WHᵣₒₕ^{mom} des Rohwassers bestimmt wird. Sodann passiert dieses Rohwasser eine der beiden oder auch beide Kammern mit Ionentauscherharz 5, wobei dieses vollständig enthärtet wird. Schließlich passiert das enthärtete Wasser den Durchflussmesser 14, der den momentanen, ersten Teilstrom V(t)_{teil1weich}^{mom} bestimmt.

Der zweite Teil des Rohwassers in der Bypassleitung 18 passiert zunächst eine automatisch betätigbare Verschneideeinrichtung 9a, hier ein mit einem Stellmotor 10 verstellbares Verschneideventil 9, und anschließend einen Durchflussmesser 17, welcher den momentanen zweiten Teilstrom V(t)ₜₑᵢₗ₂ᵣₒₕ^{mom} bestimmt.

Der erste Teilstrom V(t)_{teil1weich} und der zweite Teilstrom V(t)ₜₑᵢₗ₂ᵣₒₕ werden schließlich zu einem Verschnittwasserstrom V(t)_{verschnitt} vereint, welcher einem Ablauf 3 zufließt. Der Ablauf 3 ist an (hier) die eine Wasserentnahmestation 50 angeschlossen. Die Wasserentnahmestation 50 befindet sich außerhalb des Versorgungsraumes, in dem die Wasserenthärtungsanlage 1 (einschließlich Steuereinrichtung 11) angeordnet ist, was durch Trennwände 56 angedeutet ist. Einem Bediener der Wasserentnahmestation 50 ist daher die Wasserenthärtungsanlage 1 nicht zugänglich. Im Allgemeinen sind die mehreren Wasserentnahmestationen 50 im Rahmen der Erfindung typischerweise wenigstens 2 m von der Wasserenthärtungsanlage 1 (und insbesondere deren Steuereinrichtung 11) entfernt.

Die Messergebnisse des Leitfähigkeitssensors 12 und der Durchflussmesser 14, 17 werden an eine elektronische Steuereinrichtung 11 gemeldet. In der Steuereinrichtung 11 ist ein gewünschter Sollwert SW der Wasserhärte des Verschnittwassers, die an der Wasserentnahmestation 50 verfügbar sein soll, hinerlegt. Aus dem Sollwert SW der Verschnittwasserhärte und der momentanen Wasserhärte WHᵣₒₕ ^{mom} ermittelt die Steuereinrichtung 11 ein momentanes Soll-Verhältnis der Teilströme V(t)_{teil1weich} und V(t)ₜₑᵢₗ₂ᵣₒₕ, durch welches sich die gewünschte Wasserhärte im Verschnittwasser ergibt. Entsprechen die momentanen Teilströme V(t)_{teil1weich}^{mom} und V(t)ₜₑᵢₗ₂ᵣₒₕ^{mom} nicht dem Soll-Verhältnis, so regelt die Steuereinrichtung 11 automatisch die Verstellposition (hier den Strömungsquerschnitt) des Verschneideventils 9 über den Stellmotor 10 nach, beispielsweise über eine PD- oder PID-Regelung. Dadurch kann die Wasserenthärtungsanlage 1 auch bei schwankender Rohwasserhärte oder schwankenden Leitungsdrücken eine konstante Verschnittwasserhärte liefern.

Zusätzlich überwacht die Steuereinrichtung 11 auch den Erschöpfungsgrad der gerade aktiven Kammer der Enthärtungsvorrichtung 6. Bei Wasserentnahmen wird dabei die entnommene Weichwassermenge jeweils mit der zugehörigen momentanen Rohwasserhärte gewichtet und von der (derzeitgen Rest-) Kapazität abgezogen. Ist die Kammer erschöpft, so schaltet die Steuereinrichtung 11 die Enthärtungsvorrichtung 6 auf die andere (nichterschöpfte) Kammer um und veranlasst außerdem die Regeneration der erschöpften Kammer. Hierfür wird ein Regenerationsventil 15 mit einem Stellmotor 16 durch die Steuereinrichtung 11 automatisch betätigt, wodurch Regeneriermittellösung (bevorzugt Salzsole) 7 aus einem Vorratsgefäß 8 durch die erschöpfte Kammer strömt.

Die Wasserentnahmestation 50 umfasst eine Verbrauchsstelle (Entnahmearmatur) 20, etwa einen Wasserhahn, und weiterhin ein Absperrventil 21, das über ein Stellglied 22 geöffnet bzw. geschlossen wird. Am Stellglied 22 der Entnahmearmatur 20 befindet sich eine Eingabevorrichtung 23, hier in Gestalt von drei Auswahltasten, über die eine gewünschte Wasserhärte eingegeben werden kann. Die drei Tasten stehen beispielsweise für 2°dH, 6°dH und 18°dH, was auf diesen jeweils aufgedruckt ist, und beispielsweise für die Anwendungen Bügeln (2°dH), Duschen/Baden (6°dH) und Kaltgetränkebereitung (18°dH) bestimmt ist.

Wird eine neue gewünschte Wasserhärte an der Eingabevorrichtung 23 eingegeben, so wird diese als neuer Sollwert SW an die Steuereinrichtung 11 über (hier) ein Datenübertragungskabel 51 übermittelt und von dieser sodann für die Verschneideeinrichtung 9a angewandt.

Die Auswahltasten der Eingabevorrichtung 23 sind in der Ausführungsform jeweils grün und rot beleuchtbar. Wird eine neue Auswahltaste gedrückt, so wird sie zunächst rot beleuchtet. Dadurch wird dem Bediener mitgeteilt, dass die zugehörige Wasserhärte zwar angefordert ist, aber an der Entnahmestelle 20 noch nicht zur Verfügung steht. Sobald der Leitungsabschnitt des Ablaufs 3 bis zur Wasserentnahmestation 50 mit Verschnittwasser der neu angeforderten Härte gespült ist, ändert sich die Beleuchtung der Auswahltaste auf grün. Der Bediener weiß dann, dass die gewünschte Härte nunmehr zur Verfügung steht. Die gründe Beleuchtung wird zur Anzeige der derzeit gegenwärtigen Wasserhärte beibehalten, bis eine andere Auswahltaste gedrückt worden wird.

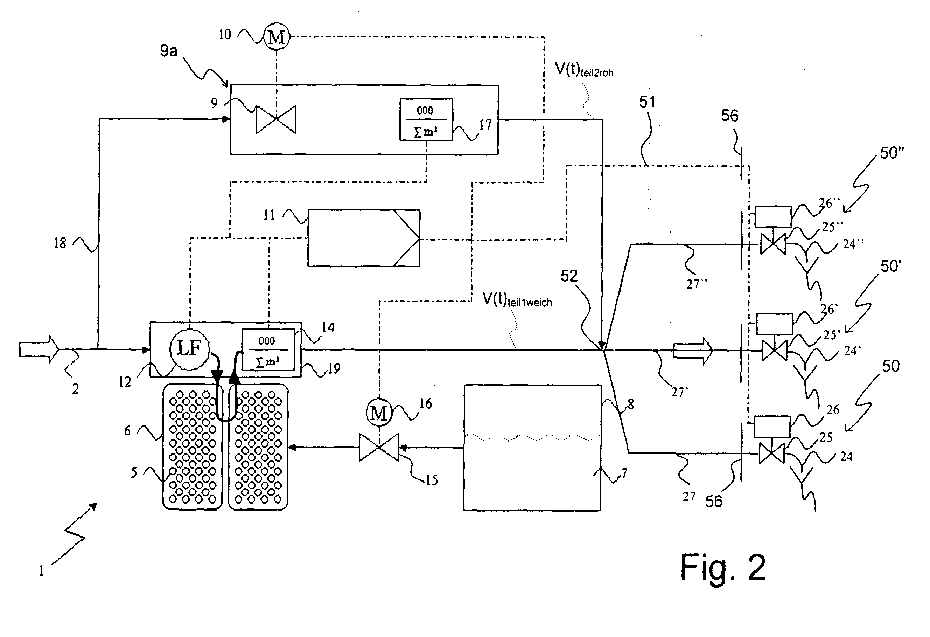

Die Figur 2 zeigt ein ähnliches Wasserenthärtungssystem wie Fig. 1; im folgenden werden nur die Unterschiede erläutert (entsprechendes gilt auch für die nachfolgenden Figuren).

In dieser erfindungsgemäßen Ausführungsform sind drei Wasserentnahmestationen 50, 50', 50" vorgesehen, die von einer gemeinsamen Verschneideeinrichtung 9a mit Verschnittwasser versorgt werden.

Jede Entnahmearmatur 24, 24', 24" der Wasserentnahmestationen 50, 50', 50" liefert ein Verschnittwasser mit einer individuellen, in der Steuereinrichtung vordefinierten (und in dieser Ausführungsform nur an der Steuervorrichtung unmittelbar abänderbaren) Wasserhärte. Sämtliche Entnahmearmaturen 24, 24', 24" werden über separate Zuleitungen 27, 27', 27" von der Verschneideeinrichtung 9a aus gespeist; die Zuleitungen 27, 27', 27" verzweigen unmittelbar hinter dem Zusammenflusspunkt 52 der Teilströme V(t)_{teil1weich} und V(t)ₜₑᵢₗ₂ᵣₒₕ.

Da sich die Wasserhärte in den einzelnen Zuleitungen 27, 27', 27" nicht ändert, ist ein Ausspülen von Verschnittwasser anderer Härte aus den Zuleitungen 27, 27', 27" vor Benutzung des Wassers nicht erforderlich. Beispielsweise kann eine zur Küche führende Zuleitung (etwa die unterste Zuleitung 27) immer 2°iges Wasser beinhalten, eine andere Zuleitung (etwa die mittlere Zuleitung 27'), die zur Badewanne / Dusche führt, ist mit 6°igem Wasser gefüllt, während eine dritte Zuleitung (etwa die oberste Zuleitung 27"), die einen WC-Kasten speist, härteres Wasser führt.

Die Verschneideeinrichtung 9a wird über die Steuereinrichtung 11 durch bloßes Öffnen eines Absperrventils 25, 25', 25" mittels eines Stellgliedes 26, 26', 26" an der jeweiligen Entnahmearmatur 24, 24', 24"angesteuert; das Öffnen eines bestimmten Absperrventils wird über das Datenübertragungskabel 51 dafür an die Steuereinrichtung 11 gemeldet. Wird z.B. die Dusche (über Absperrventil 25') betätigt, so stellt sich die Verschneideeinrichtung 9a automatisch so ein, dass die Verschnittwasserhärte 6°dH beträgt. Es können auch "Leitungsgruppen" gebildet werden (z.B. Toilettenleitung für alle Toiletten, Duschleitung für alle Duschen, usw.), so dass jede Ablaufleitung 27, 27', 27" mehrere Wasserentnahmestationen versorgt. Die Stellglieder 26, 26', 26" sind in dieser Ausführungsform so eingerichtet, dass das Öffnen eines Absperrventils 25, 25', 25" nur möglich ist, wenn alle anderen Absperrventile 25, 25'; 25" geschlossen sind.

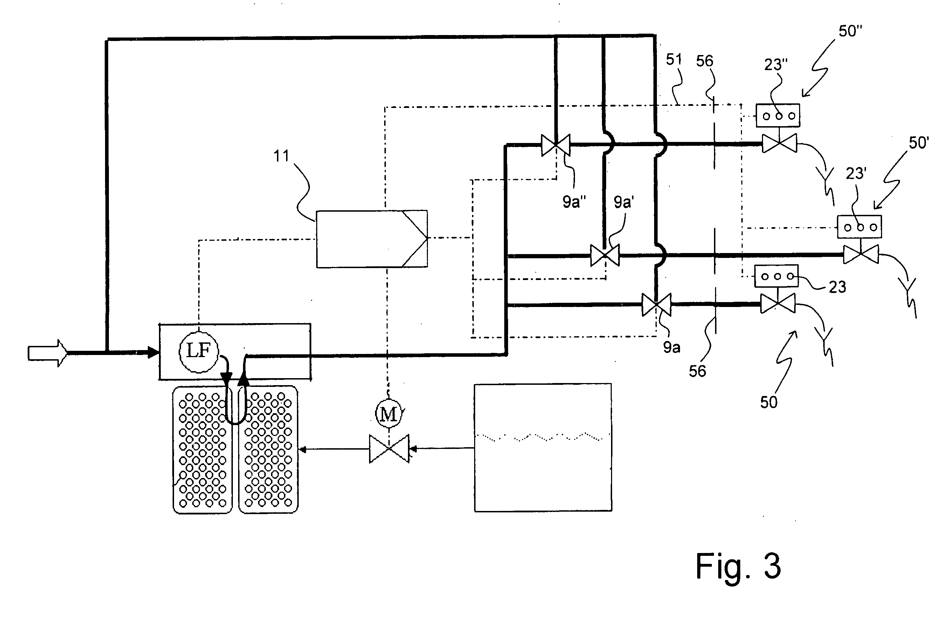

Die Figur 3 zeigt ein weiteres Wasserenthärtungssystem zur allgemeinen Erläuterung. Die elektronische Steuereinrichtung 11 steuert drei einfache Verschneideeinrichtungen 9a, 9a', 9a", die jeweils (hier) genau eine Wasserentnahmestation 50, 50', 50" mit Verschnittwasser versorgen. Jede Wasserentnahmestation 50, 50', 50" verfügt über eine eigene Eingabevorrichtung 23, 23', 23" zur Vorgabe eines Sollwerts der Wasserhärte für die jeweils zugehörige Verschneideeinrichtung 9a, 9a', 9a". In diesem Wasserenthärtungssystem können mehrere Wasserentnahmestationen 50, 50', 50" (oder Stränge von Wasserentnahmestationen) unabhängig voneinander mit Verschnittwasser unterschiedlicher Härte versorgt werden.

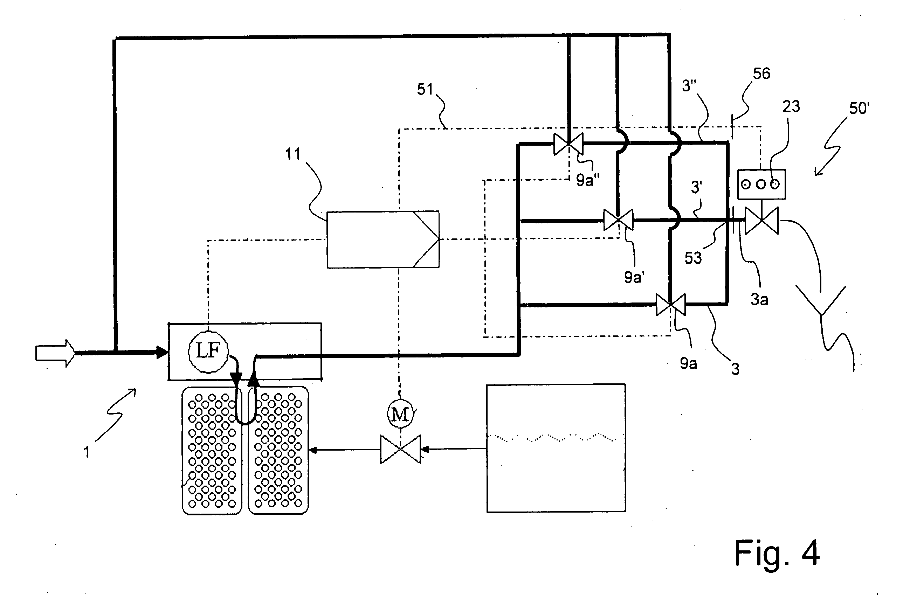

Das Wasserenthärtungssystem, das in Figur 4 zur allgemeinen Erläuterung dargestellt ist, verfügt über mehrere Verschneideeinrichtungen 9a, 9a', 9a", die zusammen eine Wasserentnahmestation 50 (oder einen Strang von Wasserentnahmestationen) gemeinsam mit Verschnittwasser versorgen. Ablaufleitungen 3, 3', 3" der Verschneideeinrichtungen 9a, 9a', 9a" laufen an einem Zusammenflusspunkt 53 zusammen, von dem aus über einen zusammengeführten Verschnittwasserablauf 3a die Wasserentnahmestation 50 angeschlossen ist.

Jede Verschneideeinrichtung 9a, 9a', 9a" der Wasserenthärtungsanalage 1 ist für einen bestimmten Härtebereich zuständig. Beispielsweise ist die unterste Verschneideeinrichtung 9a für einen Härtebereich 0-4°dH zuständig, die mittlere Verschneideeinrichtung 9a' ist für einen Härtebereich 5-10°dH zuständig, und die oberste Verschneideeinrichtung 9a" ist für einen Härtebereich von 11 und mehr °dH zuständig. Je nach angeforderter Wasserhärte, eingegeben an einer Eingabevorrichtung 23 der Wasserentnahmestation 50 und übermittelt über das Datenübertragungskabel 51 and die Steuereinrichtung11, wählt die Steuereinrichtung 11 die zuständige Verschneideeinrichtung 9a, 9a', 9a" aus und regelt diese auf den vorgegebenen Sollwert ein; an den übrigen Verschneideeinrichtungen 9a, 9a', 9a" wird der Wassenfluss komplett gesperrt.

Damit werden extreme und häufige Einstellungsänderungen der einzelnen Verschneideeinrichtungen 9a, 9a', 9a" vermieden; der Materialverschleiß verringert sich. Außerdem werden die vorgegebenen Sollwerte (SW) schneller erreicht, wenn jede einzelne Verschneideeinrichtung 9a, 9a'. 9a" lediglich innerhalb eines begrenzten Härteintervalls arbeitet.

## Patentansprüche

1. Verfahren zum Betrieb einer Wasserenthärtungsanlage (1) mit
- einer automatisch verstellbaren Verschneideeinrichtung (9a, 9a', 9a") zum Mischen eines Verschnittwasserstroms V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ, und mit
- einer elektronischen Steuereinrichtung (11),
wobei die Steuereinrichtung (11) mittels einer oder mehrerer, experimentell bestimmter, momentaner Messgrößen die Verstellposition der Verschneideeinrichtung (9a, 9a', 9a") so regelt, dass die Wasserhärte im Verschnittwasserstrom V(t)_{verschnitt} auf einen vorgegebenen Sollwert (SW) eingestellt wird,
**dadurch gekennzeichnet,**
**dass** die Verschneideeinrichtung (9a, 9a', 9a") mehrere Wasserentnahmestationen (50, 50', 50") mit Verschnittwasser versorgt, dass der Sollwert (SW) durch eine Einstellung der mehreren Wasserentnahmestationen (50, 50', 50") vorgegeben wird, wobei der Sollwert (SW) in Abhängigkeit davon, an welcher der Wasserentnahmestationen (50, 50', 50") gerade Verschnittwasser entnommen wird, bestimmt wird,
und **dass** die Einstellung der mehreren Wasserentnahmestationen (50, 50', 50") an die Steuereinrichtung (11) übermittelt wird.

2. Verfahren nach Anspruch 1, **dadurch gekennzeichnet, dass** mindestens eine Wasserentnahmestation (50, 50', 50") eine Eingabevorrichtung (23) aufweist, an der der Sollwert (SW) eingegeben wird.

3. Verfahren nach Anspruch 2, **dadurch gekennzeichnet, dass** der über die Eingabevorrichtung (23) an der Wasserentnahmestation (50, 50', 50") eingegebene Sollwert (SW) mittels einer Funkdatenübertragung oder einer leitungsgebundenen Datenübertragung der elektronischen Steuereinrichtung (11) der Wasserenthärtungsanlage (1) übermittelt wird.

4. Verfahren nach einem der vorhergehenden Ansprüche, **dadurch gekennzeichnet, dass** zumindest für einen Teil der Wasserentnahmestationen (50, 50', 50") feste, in der Steuereinrichtung (11) definierte Sollwerte zugewiesen sind.

5. Verfahren nach einem der Ansprüche 1 bis 4, **dadurch gekennzeichnet, dass** im Falle einer gleichzeitigen Wasserentnahme an mehreren Wasserentnahmestationen (50, 50', 50") der Sollwert durch diejenige Wasserentnahmestation (50, 50', 50"), an der als erstes mit der Wasserentnahme begonnen wurde, bestimmt wird.

6. Verfahren nach einem der Ansprüche 1 bis 4, **dadurch gekennzeichnet, dass** im Falle einer gleichzeitigen Wasserentnahme an mehreren Wasserentnahmestationen (50, 50', 50") der Sollwert durch diejenige Wasserentnahmestation (50, 50', 50"), die die niedrigste Verschnittwasserhärte anfordert, bestimmt wird.

7. Verfahren nach einem der vorhergehenden Ansprüche, **dadurch gekennzeichnet, dass** eine Aufteilung des Verschnittwasserstroms V(t)_{verschnitt} auf die verschiedenen Wasserentnahmestationen (50, 50', 50") unmittelbar hinter dem Zusammenfluss (52) von weichwasserführendem Teilstrom V(t)_{teil1weich} und rohwasserführendem Teilstrom V(t)ₜₑᵢₗ₂ᵣₒₕ erfolgt.

8. Verfahren nach einem der vorhergehenden Ansprüche, **dadurch gekennzeichnet, dass** eine Anzeige an einer Wasserentnahmestation (50, 50', 50") signalisiert, sobald das dort entnommene Wasser den vorgegebenen Sollwert (SW) erreicht hat.

9. Verfahren nach einem der vorhergehenden Ansprüche, **dadurch gekennzeichnet, dass** ein Signalgeber an einer Wasserentnahmestation (50, 50', 50") ein Warnsignal abgibt, solange das dort entnommene Wasser den vorgegebenen Sollwert (SW) noch nicht erreicht hat.

10. Verfahren nach einem der vorhergehenden Ansprüche, **dadurch gekennzeichnet, dass** eine Anzeige an einer Wasserentnahmestation (50, 50', 50") anzeigt, welcher Sollwert (SW) für diese Wasserentnahmestation (50, 50', 50") vorgegeben ist.

11. Verfahren nach einem der vorhergehenden Ansprüche **dadurch gekennzeichnet, dass** die Wasserenthärtungsanlage (1) mindestens zwei Durchflussmesser (14, 17) zur direkten oder indirekten Bestimmung der momentanen Teilströme V(t)_{teil1weich} und V(t)ₜₑᵢₗ₂ᵣₒₕ umfasst, und dass die Steuerung der Verschneideeinrichtung (9a, 9a', 9a") anhand einer gemessenen, momentanen Rohwasserhärte WHᵣₒₕ^{mom} und dem vorgegebenen Sollwert (SW) für die Wasserhärte im Verschnittwasserstrom V(t)_{verschnitt} in Rückkopplung mit den bestimmten Teilströmen V(t)_{teil1weich} und V(t)ₜₑᵢₗ₂ᵣₒₕ erfolgt.

12. Verfahren nach einem der vorhergehenden Ansprüche, **dadurch gekennzeichnet, dass** mindestens eine Wasserentnahmestation (50, 50', 50") einen Kaltwasserzufluss und einen Warmwasserzufluss mit Anteilen entsprechend einer Einstellung einer Mischeinrichtung an der Wasserentnahmestation (50, 50', 50") mischt,
wobei einer der Zuflüsse, insbesondere der Warmwasserzufluss, eine feste Wasserhärte aufweist und der andere Zufluss, insbesondere der Kaltwasserzufluss, über die Verschneideeinrichtung (9a, 9a', 9a") mit Verschnittwasser versorgt wird,
und dass die Einstellung der Mischeinrichtung an die Steuereinrichtung (11) übermittelt wird und zur Bestimmung des Sollwerts ausgewertet wird.

13. Verfahren nach einem der vorhergehenden Ansprüche, **dadurch**
**gekennzeichnet,**
**dass** die Wasserenthärtungsanlage (1) mehrere automatisch verstellbare Verschneideeinrichtungen (9a, 9a', 9a") aufweist, deren Verstellpositionen von der Steuereinrichtung (11) geregelt werden.

14. Verfahren nach Anspruch 13, **dadurch gekennzeichnet, dass**
Verschnittwasserabläufe (3, 3', 3") von mehreren Verschneideeinrichtungen (9a, 9a', 9a") zusammengeführt sind und der zusammengeführte Verschnittwasserablauf (3a) eine oder mehrere Wasserentnahmestationen (50, 50', 50") mit Verschnittwasser versorgt, und dass die Steuereinrichtung (11) anhand des Sollwerts (SW), der durch die Einstellung der einen oder der mehreren Wasserentnahmestationen (50, 50', 50") am zusammengeführten Verschnittwasserablauf (3a) vorgegeben wird, eine der zugehörigen Verschneideeinrichtungen (9a, 9a', 9a") zur Bereitstellung des Verschnittwassers auswählt und auf den Sollwert (SW) einregelt, und die übrigen zugehörigen Verschneideeinrichtungen (9a, 9a', 9a") für die Bereitstellung von Verschnittwasser sperrt.

15. Verfahren nach Anspruch 13 oder 14, **dadurch gekennzeichnet, dass** mehrere Verschneideeinrichtungen (9a, 9a', 9a") jeweils allein eine oder mehrere Wasserentnahmestationen (50, 50', 50") mit Verschnittwasser versorgen,
dass die elektronische Steuervorrichtung (11) mittels einer oder mehrerer, experimentell bestimmter, momentaner Messgrößen die Verstellpositionen der allein versorgenden Verschneideeinrichtungen (9a, 9a', 9a") so regelt, dass die Wasserhärte im Verschnittwasserstrom einer jeweiligen Verschneideeinrichtung (9a, 9a', 9a") auf einen jeweiligen Sollwert (SW) eingestellt wird,
und dass die jeweiligen Sollwerte (SW) der allein versorgenden Verschneideeinrichtungen (9a, 9a', 9a") jeweils durch eine Einstellung der einen oder der mehreren Wasserentnahmestationen (50, 50', 50"), die an die jeweilige Verschneideeinrichtung (9a, 9a', 9a") angeschlossen sind, vorgegeben werden.

16. Wasserenthärtungssystem,
umfassend eine Wasserenthärtungsanlage (1) mit
- einer automatisch verstellbaren Verschneideeinrichtung (9a, 9a', 9a") zum Mischen eines Verschnittwasserstroms V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ, und mit
- einer elektronischen Steuereinrichtung (11),
wobei die Steuereinrichtung (11) mittels einer oder mehrerer, experimentell bestimmter, momentaner Messgrößen die Verstellposition der Verschneideeinrichtung (9a, 9a', 9a") so regelt, dass die Wasserhärte im Verschnittwasserstrom V(t)_{verschnitt} auf einen vorgegebenen Sollwert (SW) eingestellt wird,
**dadurch gekennzeichnet,**
**dass** das Wasserenthärtungssystem mehrere Wasserentnahmestationen (50, 50', 50"), die zur Versorgung mit Verschnittwasser durch die Verschneideeinrichtung (9a, 9a', 9a") an die Wasserenthärtungsanlage (1) angeschlossen sind, umfasst und die Verschneideeinrichtung (9a, 9a', 9a") die mehreren Wasserentnahmestationen (50, 50', 50") mit Verschnittwasser versorgt,
**dass** Mittel zur Erfassung einer Einstellung der mehreren Wasserentnahmestationen (50, 50', 50") vorgesehen sind, wobei die Einstellung die Information umfasst, an welcher Wasserentnahmestation (50, 50', 50") gerade Wasser entnommen wird,
**dass** Mittel zur Übermittlung der erfassten Einstellung an die elektronische Steuereinrichtung (11) vorgesehen sind,
und **dass** die elektronische Steuereinrichtung (11) dazu ausgebildet ist, einen den übermittelten Einstellungen entsprechenden Sollwert an der Verschneideeinrichtung (9a, 9a', 9a") anzuwenden, wobei der Sollwert (SW) in Abhängigkeit davon, an welcher der Wasserentnahmestationen (50, 50', 50") gerade Verschnittwasser entnommen wird, bestimmt wird.

17. Wasserenthärtungssystem nach Anspruch 16, **dadurch gekennzeichnet, dass** die Mittel zur Erfassung einer Einstellung eine Eingabevorrichtung (23), insbesondere einen Drehschalter oder eine Tastatur, und/oder Entnahmesensoren, insbesondere Durchflussmesser oder Ventil-Stellungsmesssensoren, umfassen,
und/oder dass die Mittel zur Übermittlung der erfassten Einstellung einen Funksender und einen Funkempfänger oder ein Datenübertragungskabel (51) umfassen.

18. Wasserenthärtungssystem nach einem der Ansprüche 16 oder 17,
**dadurch gekennzeichnet, dass** die Wasserenthärtungsanlage (1) mehrere Verschneideeinrichtungen (9a, 9a', 9a") jeweils zur Versorgung einer oder mehrerer Wasserentnahmestationen (50, 50', 50") mit Verschnittwasser aufweist,
und dass die elektronische Steuervorrichtung (11) mittels einer oder
mehrerer, experimentell bestimmter, momentaner Messgrößen die Verstellpositionen der Verschneideeinrichtungen (9a, 9a', 9a") so regelt, dass die Wasserhärte im jeweiligen Verschnittwasserstrom V(t)_{verschnitt} auf einen jeweiligen vorgegebenen Sollwert (SW) eingestellt wird.

19. Verwendung eines Wasserenthärtungssystems nach Anspruch 16 bis 18 in einem Verfahren nach einem der Ansprüche 1 bis 15.

## Claims

1. Method for operating a water softening plant (1) having:
- an automatically adjustable blending device (9a, 9a', 9a") for mixing a blended water flow V(t)_{blended} comprising a first softened partial flow V(t)_{part1soft} and a second partial flow V(t)_{part2untreated} which carries untreated water, and having
- an electronic control device (11),
the control device (11) controlling the adjustment position of the blending device (9a, 9a', 9a") by means of one or more experimentally determined current measurement variables in such a manner that the water hardness in the blended water flow V(t)_{blended} is adjusted to a predetermined desired value (SW),
**characterised in that** the blending device (9a, 9a', 9a") supplies a plurality of water removal stations (50, 50', 50") with blended water, that the desired value (SW) is predetermined by a setting of the plurality of water removal stations (50, 50', 50"), wherein the desired value (SW) is determined as a function of the water removal station (50, 50', 50") from which blended water is currently removed,
and **in that** the setting of the plurality of water removal stations (50, 50', 50") is transmitted to the control device (11).

2. Method according to claim 1, **characterised in that** at least one water removal station (50, 50', 50") has an input device (23) at which the desired value (SW) is input.

3. Method according to claim 2, **characterised in that** the desired value (SW) input at the water removal station (50, 50', 50") by means of the input device (23) is transmitted to the electronic control device (11) of the water softening plant (1) by means of radio data transmission or wired data transmission.

4. Method according to any one of the preceding claims, **characterised in that** fixed desired values which are defined in the control device (11) are assigned for at least some of the water removal stations (50, 50', 50").

5. Method according to any one of claims 1 to 4, **characterised in that**, if water is removed from a plurality of water removal stations (50, 50' 50") at the same time, the desired value is determined by the water removal station (50, 50' 50") from which water first began to be removed.

6. Method according to any one of claims 1 to 4, **characterised in that**, when water is removed from a plurality of water removal stations (50, 50' 50") at the same time, the desired value is determined by the water removal station (50, 50' 50") which requests the lowest level of blended water hardness.

7. Method according to any one of the preceding claims, **characterised in that** a division of the flow of blended water V(t)_{blended} between the various water removal stations (50, 50' 50") is carried out directly downstream of the confluence (52) of the soft-water-carrying partial flow V(t)_{part1soft} and untreated-water-carrying partial flow V(t)p_{art2untreated}.

8. Method according to any one of the preceding claims, **characterised in that** a display at a water removal station (50, 50' 50") signals as soon as the water removed from that location has reached the predetermined desired value (SW).

9. Method according to any one of the preceding claims, **characterised in that** a signal transmitter at a water removal station (50, 50', 50") outputs a warning signal as long as the water removed at that location has not yet reached the predetermined desired value (SW).

10. Method according to any one of the preceding claims, **characterised in that** a display at a water removal station (50, 50', 50") indicates which desired value (SW) is predetermined for this water removal station (50, 50', 50").

11. Method according to any one of the preceding claims, **characterised in that** the water softening plant (1) comprises at least two flow meters (14, 17) for directly or indirectly determining the current partial flows V(t)_{part1soft} and V(t)_{part2untreated}, and **in that** the blending device (9a, 9a', 9a") is controlled in accordance with a measured current untreated water hardness WH_{untreated}^{mom} and the predetermined desired value (SW) for the water hardness in the blended water flow V(t)_{blended} by way of feedback with the determined partial flows V(t)_{part1soft} and V(t)_{part2untreated}.

12. Method according to any one of the preceding claims, **characterised in that** at least one water removal station (50, 50', 50") mixes a cold water supply flow and a warm water supply flow with proportions in accordance with a setting of a mixing device at the water removal station (50, 50', 50"),
one of the supply flows, in particular the warm water supply flow, having a fixed water hardness and the other supply flow, in particular the cold water supply flow, being supplied with blended water via the blending device (9a, 9a', 9a"),
and **in that** the setting of the mixing device is transmitted to the control device (11) and is evaluated in order to determine the desired value.

13. Method according to any one of the preceding claims, **characterised in that** the water softening plant (1) has a plurality of automatically adjustable blending devices (9a, 9a', 9a") whose adjustment positions are controlled by the control device (11).

14. Method according to claim 13, **characterised in that** blended water discharge flows (3, 3', 3") from a plurality of blending devices (9a, 9a' 9a") are combined and the combined blended water discharge flow (3a) supplies one or more water removal stations (50, 50', 50") with blended water,
and **in that** the control device (11), using the desired value (SW) which is predetermined by the setting of the one or more water removal station(s) (50, 50', 50") at the combined blended water discharge flow (3a), selects one of the associated blending devices (9a, 9a', 9a") for providing the blended water and adjusts it to the desired value (SW) and blocks the remaining associated blending devices (9a, 9a', 9a") for providing blended water.

15. Method according to claim 13 or claim 14, **characterised in that** a plurality of blending devices (9a, 9a', 9a") each exclusively supply one or more water removal stations (50, 50', 50") with blended water,
**in that** the electronic control device (11) controls the adjustment positions of the blending devices (9a, 9a', 9a") which are exclusively providing a supply by means of one or more experimentally determined current measurement variables in such a manner that the water hardness in the flow of blended water of a respective blending device (9a, 9a', 9a") is adjusted to a respective desired value (SW),
and **in that** the respective desired values (SW) of the blending devices (9a, 9a', 9a") which are exclusively providing a supply are each predetermined by a setting of the one or more water removal stations (50, 50', 50") which are connected to the respective blending device (9a, 9a', 9a").

16. Water softening system,
comprising a water softening plant (1) having:
- an automatically adjustable blending device (9a, 9a', 9a") for mixing a blended water flow V(t)_{blended} comprising a first softened partial flow V(t)_{part1soft} and a second partial flow V(t)_{part2untreated} which carries untreated water, and having
- an electronic control device (11),
the control device (11) controlling the adjustment position of the blending device (9a, 9a', 9a") by means of one or more experimentally determined current measurement variables in such a manner that the water hardness in the flow of blended water V(t)_{blended} is adjusted to a predetermined desired value (SW),
**characterized in that** the water softening system comprises a plurality of water removal stations (50, 50', 50") which are connected, in order to be supplied with blended water by the blending device (9a, 9a', 9a"), to the water softening plant (1), and
**in that** the blending device (9a, 9a', 9a") supplies the plurality of water removal stations (50, 50', 50") with blended water,
that means for detecting a setting of the plurality of water removal stations (50, 50', 50") are provided, wherein the setting comprises the information from which water removal station (50, 50', 50") water is currently removed,
**in that** means for transmitting the detected setting to the electronic control device (11) are provided,
and **in that** the electronic control device (11) is constructed to use a desired value which corresponds to the transmitted settings in the blending device (9a, 9a', 9a"), wherein the desired value (SW) is determined as a function of the water removal station (50, 50', 50") from which blended water is currently removed.

17. Water softening system according to claim 16, **characterised in that** the means for detecting a setting comprise an input device (23), in particular a rotary switch or a keyboard, and/or removal sensors, in particular flow meters or valve position measurement sensors,
and/or **in that** the means for transmitting the detected setting comprise a radio transmitter and a radio receiver or a data transmission cable (51).

18. Water softening system according to either claim 16 or claim 17, **characterised in that** the water softening plant (1) has a plurality of blending devices (9a, 9a', 9a") each for supplying one or more water removal stations (50, 50', 50") with blended water,
and **in that** the electronic control device (11) controls the adjustment positions of the blending devices (9a, 9a', 9a") by means of one or more experimentally determined current measurement variables so that a respective water hardness in the blended water flow V(t)_{blended} is adjusted to a respective predetermined desired value (SW).

19. Use of a water softening system according to claims 16 to 18 in a method according to any one of claims 1 to 15.

## Revendications

1. Procédé d'actionnement d'une installation (1) d'adoucissement d'eau comprenant
- un dispositif de mixage (9a, 9a', 9a") à réglage automatique, conçu pour mélanger un flux V(t)_{verschnitt} d'eau mixée, constitué d'un premier flux partiel adouci V(t)_{teil1weich}, et d'un second flux partiel V(t)ₜₑᵢₗ₂ᵣₒₕ charriant de l'eau brute, et
- un dispositif de commande électronique (11),
ledit dispositif de commande (11) régulant la position de réglage dudit dispositif de mixage (9a, 9a', 9a"), au moyen d'une ou plusieurs grandeur(s) de mesure instantanée(s) déterminée(s) expérimentalement, de façon telle que la dureté de l'eau soit réglée sur une valeur de consigne (SW) préétablie, dans ledit flux V(t)_{verschnitt} d'eau mixée,
**caractérisé par le fait**
**que** le dispositif de mixage (9a, 9a', 9a") alimente en eau mixée plusieurs postes (50, 50', 50") de prélèvement d'eau ;
**que** la valeur de consigne (SW) est préétablie par un réglage des multiples postes (50, 50', 50") de prélèvement d'eau, ladite valeur de consigne (SW) étant déterminée en fonction de celui, parmi lesdits postes (50, 50', 50") de prélèvement d'eau, auquel de l'eau mixée est précisément soutirée ;
et **que** le réglage desdits multiples postes (50, 50', 50") de prélèvement d'eau est communiqué au dispositif de commande (11).

2. Procédé selon la revendication 1, **caractérisé par le fait qu'**au moins un poste (50, 50', 50") de prélèvement d'eau est muni d'un dispositif de saisie (23), sur lequel la valeur de consigne (SW) est entrée.

3. Procédé selon la revendication 2, **caractérisé par le fait que** la valeur de consigne (SW), entrée au poste (50, 50', 50") de prélèvement d'eau par l'intermédiaire du dispositif de saisie (23), est communiquée au dispositif de commande électronique (11) de l'installation (1) d'adoucissement d'eau au moyen d'une transmission de données par radio, ou d'une transmission filaire de données.

4. Procédé selon l'une des revendications précédentes, **caractérisé par le fait que** des valeurs de consigne fixes, définies dans le dispositif de commande (11), sont attribuées à au moins une partie des postes (50, 50', 50") de prélèvement d'eau.

5. Procédé selon l'une des revendications 1 à 4, **caractérisé par le fait que**, dans le cas où de l'eau est simultanément soutirée à plusieurs postes (50, 50', 50") de prélèvement d'eau, la valeur de consigne est déterminée par le poste (50, 50', 50") de prélèvement d'eau auquel le soutirage d'eau a débuté en premier.

6. Procédé selon l'une des revendications 1 à 4, **caractérisé par le fait que**, dans le cas où de l'eau est simultanément soutirée à plusieurs postes (50, 50', 50") de prélèvement d'eau, la valeur de consigne est déterminée par le poste (50, 50', 50") de prélèvement d'eau qui réclame la plus faible dureté d'eau mixée.

7. Procédé selon l'une des revendications précédentes, **caractérisé par le fait qu'**une répartition du flux V(t)_{verschnitt} d'eau mixée, entre les différents postes (50, 50', 50") de prélèvement d'eau, a lieu directement en aval de l'écoulement conjoint (52) de flux partiel V(t)_{teil1weich}, charriant de l'eau adoucie, et de flux partiel V(t)ₜₑᵢₗ₂ᵣₒₕ charriant de l'eau brute.

8. Procédé selon l'une des revendications précédentes, **caractérisé par le fait qu'**un affichage délivre un signal, dans un poste (50, 50', 50") de prélèvement d'eau, aussitôt que l'eau soutirée à ce dernier a atteint la valeur de consigne (SW) préétablie.

9. Procédé selon l'une des revendications précédentes, **caractérisé par le fait qu'**un générateur de signaux émet un signal d'alerte, dans un poste (50, 50', 50") de prélèvement d'eau, tant que l'eau soutirée à ce dernier n'a pas encore atteint la valeur de consigne (SW) préétablie.

10. Procédé selon l'une des revendications précédentes, **caractérisé par le fait qu'**un affichage indique, dans un poste (50, 50', 50") de prélèvement d'eau, la valeur de consigne (SW) qui est préétablie pour ce poste (50, 50', 50") de prélèvement d'eau.

11. Procédé selon l'une des revendications précédentes, **caractérisé par le fait que** l'installation (1) d'adoucissement d'eau comprend au moins deux débitmètres (14, 17), en vue de la détermination directe ou indirecte des flux partiels V(t)_{teil1weich} et V(t)ₜₑᵢₗ₂ᵣₒₕ instantanés ; et **par le fait que** la commande du dispositif de mixage (9a, 9a', 9a") s'opère sur la base d'une dureté WHᵣₒₕ^{mom} de l'eau brute, instantanée et mesurée, et de la valeur de consigne (SW) préétablie dédiée à la dureté de l'eau dans le flux V(t)_{verschnitt} d'eau mixée, en rétroaction avec lesdits flux partiels V(t)_{teil1weich} et V(t)ₜₑᵢₗ₂ᵣₒₕ déterminés.

12. Procédé selon l'une des revendications précédentes, **caractérisé par le fait qu'**au moins un poste (50, 50', 50") de prélèvement d'eau mélange un flux d'arrivée d'eau froide et un flux d'arrivée d'eau chaude en des proportions correspondant à un réglage d'un dispositif mélangeur audit poste (50, 50', 50") de prélèvement d'eau, sachant que l'un des flux d'arrivée, en particulier le flux d'arrivée d'eau chaude, présente une dureté d'eau fixe et l'autre desdits flux d'arrivée, en particulier le flux d'arrivée d'eau froide, est alimenté en eau mixée par l'intermédiaire du dispositif de mixage (9a, 9a', 9a") ; et **par le fait que** le réglage dudit dispositif mélangeur est communiqué au dispositif de commande (11) et est exploité pour la détermination de la valeur de consigne.

13. Procédé selon l'une des revendications précédentes, **caractérisé par le fait que** l'installation (1) d'adoucissement d'eau présente plusieurs dispositifs de mixage (9a, 9a', 9a") réglables automatiquement, dont les positions de réglage sont régulées par le dispositif de commande (11).

14. Procédé selon la revendication 13, **caractérisé par le fait que** des sorties (3, 3', 3") d'eau mixée émanant de plusieurs dispositifs de mixage (9a, 9a', 9a") sont regroupées et la sortie regroupée (3a) d'eau mixée alimente, en eau mixée, un ou plusieurs poste(s) (50, 50', 50") de prélèvement d'eau ;
et que, sur la base de la valeur de consigne (SW) préétablie au niveau de ladite sortie regroupée (3a) d'eau mixée, par le réglage de l'un ou des multiples postes (50, 50', 50") de prélèvement d'eau, le dispositif de commande (11) sélectionne l'un des dispositifs de mixage associés (9a, 9a', 9a") en vue de l'élaboration de l'eau mixée, règle ledit dispositif sur ladite valeur de consigne (SW), et interdit l'élaboration d'eau mixée pour les autres dispositifs de mixage (9a, 9a', 9a") associés.

15. Procédé selon la revendication 13 ou 14, **caractérisé par le fait que** plusieurs dispositifs de mixage (9a, 9a', 9a") alimentent respectivement, en eau mixée, l'un seulement ou plusieurs des postes (50, 50', 50") de prélèvement d'eau ;
que le dispositif de commande électronique (11) régule les positions de réglage des seuls dispositifs de mixage (9a, 9a', 9a") affectés à l'alimentation, au moyen d'une ou plusieurs grandeur(s) de mesure instantanée(s) déterminée(s) expérimentalement, de façon telle que la dureté de l'eau, dans le flux d'eau mixée d'un dispositif de mixage (9a, 9a', 9a") considéré, soit réglée sur une valeur de consigne (SW) respective ;
et que les valeurs de consigne respectives (SW) desdits seuls dispositifs de mixage (9a, 9a', 9a") affectés à l'alimentation sont préétablies, à chaque fois, par un réglage de l'un ou des multiples postes (50, 50', 50") de prélèvement d'eau raccordé(s) audit dispositif de mixage (9a, 9a', 9a") considéré.

16. Système adoucisseur d'eau,
incluant une installation (1) d'adoucissement d'eau qui comprend
- un dispositif de mixage (9a, 9a', 9a") à réglage automatique, conçu pour mélanger un flux V(t)_{verschnitt} d'eau mixée, constitué d'un premier flux partiel adouci V(t)_{teil1weich}, et d'un second flux partiel V(t)ₜₑᵢₗ₂ᵣₒₕ charriant de l'eau brute, et
- un dispositif de commande électronique (11),
ledit dispositif de commande (11) régulant la position de réglage dudit dispositif de mixage (9a, 9a', 9a"), au moyen d'une ou plusieurs grandeur(s) de mesure instantanée(s) déterminée(s) expérimentalement, de façon telle que la dureté de l'eau soit réglée sur une valeur de consigne (SW) préétablie, dans ledit flux V(t)_{verschnitt} d'eau mixée,
**caractérisé par le fait**
**que** ledit système adoucisseur d'eau inclut plusieurs postes (50, 50', 50") de prélèvement d'eau qui sont raccordés à l'installation (1) d'adoucissement d'eau en vue de l'alimentation en eau mixée, par l'intermédiaire du dispositif de mixage (9a, 9a', 9a"), et ledit dispositif de mixage (9a, 9a', 9a") alimente en eau mixée les multiples postes (50, 50', 50") de prélèvement d'eau ;
**que** des moyens sont prévus pour détecter un réglage des multiples postes (50, 50', 50") de prélèvement d'eau, ledit réglage englobant l'information ciblant le poste (50, 50', 50") de prélèvement d'eau auquel de l'eau est précisément soutirée ;
**que** des moyens sont prévus pour communiquer le réglage détecté au dispositif de commande électronique (11) ;
et **que** ledit dispositif de commande électronique (11) est réalisé de manière à appliquer, audit dispositif de mixage (9a, 9a', 9a"), une valeur de consigne correspondant aux réglages communiqués, ladite valeur de consigne (SW) étant déterminée en fonction de celui desdits postes (50, 50', 50") de prélèvement d'eau auquel de l'eau mixée est précisément soutirée.

17. Système adoucisseur d'eau selon la revendication 16, **caractérisé par le fait que** les moyens de détection d'un réglage comprennent un dispositif de saisie (23), en particulier un commutateur rotatif ou un clavier, et/ou des détecteurs de soutirage, en particulier des débitmètres ou des capteurs de mesure de positions de vannes ;
et/ou que les moyens conçus pour communiquer le réglage détecté comprennent un émetteur radio et un récepteur radio, ou un câble (51) de transmission de données.

18. Système adoucisseur d'eau selon l'une des revendications 16 ou 17, **caractérisé par le fait que** l'installation (1) d'adoucissement d'eau présente plusieurs dispositifs de mixage (9a, 9a', 9a") respectivement dévolus à l'alimentation, en eau mixée, d'un ou de plusieurs poste(s) (50, 50', 50") de prélèvement d'eau ;
et que le dispositif de commande électronique (11) régule les positions de réglage desdits dispositifs de mixage (9a, 9a', 9a"), au moyen d'une ou plusieurs grandeur(s) de mesure instantanée(s) déterminée(s) expérimentalement, de façon telle que la dureté de l'eau soit réglée, dans le flux considéré V(t)_{verschnitt} d'eau mixée, sur une valeur respective de consigne (SW) préétablie.

19. Utilisation d'un système adoucisseur d'eau conforme aux revendications 16 à 18, dans un procédé conforme à l'une des revendications 1 à 15.
